# EUROPÄISCHE PATENTANMELDUNG

(11) **EP 2 123 185 A2**
(43) Veröffentlichungstag der Anmeldung: **25.11.2009**
(21) Anmeldenummer: 09006449.4
(22) Anmeldetag: 13.05.2009
(51) Int. Cl.: A44C 17/00, B44C 1/26, C04B 35/622

(54) **Zweifärbiges Keramikformteil**

(30) Priorität: 21.05.2008 AT 8112008
(71) Anmelder: D. Swarovski & Co., 6112 Wattens (AT)
(72) Erfinder: Rauch, Thomas, 6020 Innsbruck (AT); Hatzl, Hannes, 6063 Rum (AT); Biebl, Michael, 6020 Innsbruck (AT)
(74) Vertreter: Hofinger, Stephan

(57) **Zusammenfassung**

Verfahren zur Herstellung von wenigstens zweifärbigen Keramikformteilen (16) aus einem eine erste der wenigstens zwei Farben aufweisenden Keramikrohstoffgranulat (5), wobei die zweite der wenigstens zwei Farben als Farbpigment (2') oder Farbpigmentmasse (2) beigegeben wird und die Oberfläche des Keramikrohstoffgranulats (5) zumindest teilweise beschichtet wird, wobei das beschichtete Keramikrohstoffgranulat (8) anschließend in eine feste Form verpresst wird.

## Beschreibung

Die Erfindung betrifft ein Verfahren zur Herstellung von wenigstens zweifärbigen Keramikformteilen aus einem eine erste der wenigstens zwei Farben aufweisenden Keramikrohstoffgranulat.

Aus der DE 34 45 189 C2 ist ein Verfahren zur Herstellung einer halbedelsteinähnlichen Hartmasse bekannt, die zur Endbearbeitung geschnitten, gespalten, geschliffen oder poliert werden kann. Dabei wird ein in teigiger Konsistenz vorliegender Füllstoff zerteilt, mit einem Zusatzpigment beschichtet und wieder zusammengedrückt. Je nach Wahl der aufgetragenen Schicht ergibt sich eine entsprechende dekorative Wirkung. Nachteilig bei dem angegebenen Verfahren ist, dass der Grundstoff zur Beschichtung teigige Konsistenz aufweisen muss und dadurch eine Verpressung in trockenem Zustand nicht möglich ist, wodurch dieses Verfahren schlecht automatisierbar ist. Des Weiteren muss dem Füllstoff ein unter Umständen komplex aufgebautes Bindemittel zugefügt werden.

Ein weiteres Verfahren zur Herstellung mehrfarbiger Keramikformteile wird in der EP 0 700 796 B1 beschrieben, In dem dort geoffenbarten Verfahren werden zwei Granulate, die Keramikpulver und Bindemittel aus der Gruppe der Polyacetale, wobei die Bindemittel in einem der Granulate einen Anteil an dem Granulat von 30 bis 60 Vol.% haben, sowie farbgebende Teilchen enthalten, geformt, entbindert und versintert, um ein Keramikformteil mit unterschiedlich farbgebenden Teilchen in unterschiedlicher Konzentration herzustellen. Durch das Pressen der verschiedenfarbigen Granalien einsteht ein mehrfarbiger Keramikfromteil mit fleckenförmigem Muster. Des Weiteren haben die hohen Bindemittelanteile neben hohen Kosten den Nachteil einer aufwändigen Entbinderung.

Aufgabe der Erfindung ist es, ein Verfahren anzugeben, das die oben genannten Nachteile vermeidet, und eine einfachere Herstellung eines wenigstens zweifarbigen Keramikformteils ermöglicht, wobei die zweite der wenigstens zwei Farben in bänderartiger Struktur am fertigen Keramikformteil auftritt. Diese bänderartige Struktur kann regelmäßige oder unregelmäßige Form und Größe aufweisen mit fließenden oder scharf definierten Farbgrenzen.

Dies wird beim erfindungsgemäßen Verfahren dadurch erreicht, dass die zweite der wenigstens zwei Farben als natürliches und/oder synthetisches Farbpigment und zusätzlich oder alternativ Farbpigmentmasse beigegeben wird und die Oberfläche des Keramikrohstoffgranulats zumindest teilweise beschichtet wird, wobei das beschichtete Keramikrohstoffgranulat anschließend in eine feste Form verpresst wird. Durch die Beigabe des als Farbpigment oder Farbpigmentmasse vorliegenden Farbstoffes kann sich dieser zumindest teilweise auf der Oberfläche der Granalien des Keramikrohstoffgranulats verteilen und dort hängen bleiben, wodurch sich die erfindungsgemäßen Beschichtungen des Keramikrohstoffgranulats und nachfolgend die bänderförmigen Farbbereiche der Keramikformtelle ergeben. Dabei kann die Oberfläche der Granalien des Keramikrohstoffgranulats nur teilweise oder auch nur Teile des Keramikrohstoffgranulats beschichtet sein und die Beschichtung und somit auch die bänderartige Struktur unregelmäßig sein. Vorzugsweise ist dabei mehr als 50 Prozent der Oberfläche des Keramikrohstoffgranulats beschichtet. Durch eine derartige Beschichtung des, auf verschiedene, an und für sich bekannte Arten, hergestellten Granulats ergibt sich nach dem Verpressungsvorgang ein wenigstens zweifarbiger Keramikformteil, wobei die zweite Farbe als bänderartige Struktur vorliegt, die unregelmäßig sein kann. Die Farbbereiche kommen umso mehr zur Geltung, wenn der Keramikformteil, beispielsweise durch Schleifen und/oder Schneiden sowie Polieren bearbeitet wird, um einen dekorativen Schmuckstein zu erhalten. Die Farbgrenzen können dabei scharf definiert sein, sodass sich beispielsweise eine marmorierte Oberflächenstruktur ergeben kann.

Die Farbpigmente, die rein oder in einer Farbpigmentmasse enthalten sind, können handelsübliche keramische Farbpigmente sein, wie sie von verschiedenen Herstellern angeboten werden. Häufig handelt es sich dabei um thermisch und chemisch stabile Mischoxide, wie zum Beispiel Praseodymgelb CAS 68187-15-5 oder Schwarz CAS 68555-06-6. Auch färbende Substanzen die Elemente aus der Gruppe der Übergangsmetalle oder der Lanthaniden enthalten können als Farbpigment oder Farbpigmentmasse in breiiger oder flüssiger Form eingesetzt werden. Die überschüssigen Farbpigmente bzw. die überschüssige Farbpigmentmasse wird abgesiebt.

In einer besonders bevorzugten Ausführungsform der Erfindung stellt die Farbpigmentmasse eine flüssige oder breiige, das Keramikrohstoffgranulat beschichtbare Substanz dar, beispielsweise eine Farbpigment-Wasser-Suspension. Dadurch wird eine einfache Applikation der Farbstoffe, beispielsweise durch Besprühen ermöglicht und die Farbstoffe können die Oberfläche des Keramikrohstoffgranulats bereits bei der Applikation teilweise beschichten. Durch eine flüssige oder breiige Farbpigmentmasse können fließende statt scharfe Farbverläufe ermöglicht werden.

In einer anderen Ausführungsform der Erfindung wird die Oberfläche des Keramikrohstoffgranulats mit einer pulverförmigen Farbpigmentmasse teilweise beschichtet. Dabei weist die pulverförmige Farbpigmentmasse einen Anteil an dem Keramikrohstoff auf und stellt ein feines, nicht rieselfähiges Pulver dar. Dieser Anteil beträgt vorzugsweise weniger als 65 Gewichts-%, beispielsweise ca. 50 Gewichts-%. Dieser Anteil an keramischer Grundmasse bewirkt, dass ein eventuell nachfolgender Sintervorgang erleichtert und die Porosität verringert wird.

In einer besonders bevorzugten Ausführungsform der Erfindung wird die Oberfläche des Keramikrohstoffgranulats teilweise beschichtet, indem das Keramikrohstoffgranulat mit dem Farbpigment oder der Farbpigmentmasse vermischt wird. Dadurch kann je nach Art und Dauer des Mischvorgangs die Beschichtung der Granalien unregelmäßig erfolgen und damit können Farbbereiche mit zufällig verteilter Form und Größe auf den erfindungsgemäßen Keramikformteilen einhergehen.

Der durch die bänderartige Struktur gegebene dekorative Effekt des wenigstens zweifarbigen Keramikformteils hängt ursächlich von der Form, Größe und Farbe des Granulats ab. Das Granulat selbst besteht aus rieselfähigen Körnern des Keramikrohstoffs, wobei die Körner prinzipiell beliebige Form und Größe aufweisen können. In einer bevorzugten Ausführungsform der Erfindung besteht das Keramikrohstoffgranulat aus Granalien mit einer Krongröße von weniger als 5 mm, vorzugsweise weniger als 3 mm. In einer Ausführungsform der Erfindung wird dabei der als Pulver oder feines Ausgangsgranulat vorliegende Keramikrohstoff, dem ein natürliches und/oder synthetisches Farbpigment beigemengt werden kann, zu Teilen mit einer vorgegebenen Form verpresst. Vorzugsweise handelt es sich dabei um kugelförmige und/oder quaderförmige Formen. Dazu können handelsübliche Pressmaschinen verwendet werden, wie sie beispielsweise aus der Produktion von Tabletten bekannt sind. Durch ein derartiges Granulationsverfahren entsteht ein Granulat mit gleichmäßiger und vorgegebener Form. Es kann aber auch vorgesehen sein, den Keramikrohstoff durch eine Rollenpresse, also zwei sich gegenläufig drehende, in geringem Abstand angeordnete Rollen, zu einem Granulat zu verpressen.

In einer weiteren Ausführungsform der Erfindung wird der als Pulver oder sehr feines Ausgangsgranulat vorliegende Keramikrohstoff in Schülpen verpresst. Diese Pressschülpen werden anschließend gebrochen, worauf dann das Gutkom ausgesiebt werden kann. Durch ein derartiges Granulationsverfahren ergeben sich kantige Granulate.

Es kann auch vorgesehen sein, dass dem Keramikrohstoff zur Granulation ein Bindemittel beigemengt wird. Dabei kann es sich um Wasser handeln, wobei der Anteil des Bindemittels zwischen 5% und 25%, vorzugsweise zwischen 10% und 20%, liegen kann. Die dabei entstehenden zusammenhaftenden Klumpen werden mechanisch durch Mischwerkzeuge und/oder Messer zerschlagen. Das sich einstellende Gleichgewicht zwischen Verklumpung und Zerschlagung bewirkt, dass durch die Trocknung ein relativ gleichkörniges kantenrundes Granulat entsteht.

In einer anderen Ausführungsform der Erfindung wird der als trockenes Pulver oder feines Ausgangsgranulat vorliegende Keramikrohstoff mechanisch bewegt und dabei gleichzeitig mit Flüssigkeit besprüht, bis Klumpen in einer gewünschten Größe entstehen. Nach einem Trocknungsvorgang entstehen dadurch relativ runde Granulate.

In einer anderen Ausführungsform der Erfindung wird dem Keramikrohstoff ein Bindemittel, beispielsweise Wasser, wobei, der Anteil des Bindemittels zwischen 5% und 25%, vorzugsweise zwischen 15% und 20% liegen kann, beigemengt. Die so entstehende feuchte Masse wird durch ein Sieb extrudiert, worauf nach Trocknung je nach Sieb unterschiedliche Formen von Granulat entstehen. Diese Formen können zylindrisch, viereckig, würfelig, sternförmig od. dgl. sein. Es kann auch vorgesehen sein, dass die durch das Sieb extrudierte Masse rundiert wird. Dabei ergeben sich gut gerundete Granulate.

In einer besonderen Ausführungsform der Erfindung liegt dabei der Keramikrohstoff, bevor das zu beschichtende Granulat hergestellt wird, als Pulver oder feines Ausgangsgranulat, vorzugsweise bestehend aus Mineralien mit Korngrößen kleiner als 100 µm vor. Der Keramikrohstoff selbst besteht dabei je nach Verfügbarkeit aus einer Mischung von Tonen, Feldspäten, Feldspatvertretern, Feldspatsanden und Quarz. Eine typische Mischung kann dabei beispielsweise aus ca. 40% Ton, 8% Kaolin, 16% Feldspat sowie 35% Feldspatsand bestehen, sodass sich eine chemische Zusammensetzung in grober Form von ca. 70% SiO₂, 18,5% Al₂O₃, 4,5% Na₂O, 1,8% K₂O, 0,5% CaO, 0.3% MgO, weniger als 1% Fe₂O₃, weniger als 1% TiO₂, und ca. 3% Produktfeuchte ergibt. Es kann auch vorgesehen sein, den Keramikrohstoff allgemein aus einem Bereich eines Dreiecksdiagramms mit SiO₂, Al₂O₃ und Alkalioxiden, der mehr als 90 Gewichts-% der Masse des Keramikrohstoffs beschreibt, zu wählen. Weiters kann es vorteilhaft sein, der tonhältigen Rohstoffgrundmasse Phosphate, beispielsweise in Form von Knochenasche, beizufügen.

In einer Ausführungsform der Erfindung kann der Keramikrohstoff selbst ein- oder mehrfärbig sein und die erste der wenigstens zwei Farben des Keramikformteils kann dabei eine der Ausgangsfarben des zu granulierenden und mit der zweiten der wenigstens zwei Farben zu beschichtenden Keramikrohstoffs sein. Es kann aber auch sein, dass die erste der wenigstens zwei Farben des Keramikformteils dem Keramikrohstoff, bevor dieser granuliert wird, in Form von natürlichem und/oder synthetischem Farbpigment bzw. Farbpigmentmasse beigemengt und mit dem Keramikrohstoff vermischt wird, vorzugsweise falls dieser als Pulver oder feines Ausgangsgranulat vorliegt.

Durch die jeweils verwendete Methode des Granulierens, die eine der oben genannten Methoden umfassen kann, wird die Form der bänderartigen Struktur und damit der Effekte bestimmt, welche sich insgesamt vom Granulat ausgehend aufgrund der zumindest teilweisen Beschichtung sowie der Verpressung ergeben. Beispielsweise kann die Form der Effekte, also der bänderartigen Struktur im Wesentlichen eckig, unregelmäßig, rund, regelmäßig, od. dgl. sein.

In einer anderen Ausführungsform der Erfindung wird das Keramikrohstoffgranulat, beispielsweise in einer vorzugsweise schräg liegenden Trommel bewegt und mit einer flüssigen Farbpigmentmasse, beispielsweise in Form einer Farbpigment-Wassersuspension besprüht, wodurch sich durch die Bewegung der Trommel die Farbpigmentmasse und das Keramikrohstoffgranulat vermischt und die Farbpigmentmasse an der Oberfläche der Keramikrohstoffgranulats anlagert und diese zumindest teilweise beschichtet werden. In einer bevorzugten Ausführungsform wird dabei mehr als 50% der Oberfläche des Keramikrohstoffgranulats beschichtet.

Es kann auch vorteilhaft sein, dass der Vorgang des Beschichtens wenigstens zweifach ausgeführt wird, mit jeweils andersfarbigen Farbpigmenten bzw. Farbpigmentmassen und zusätzlich oder alternativ mit Farbpigmenten bzw. Farbpigmentmassen im Wesentlichen derselbe Farbe aber unterschiedlicher Konzentration um unterschiedlichste dekorative Effekte zu erzeugen. Ebenso kann es vorgesehen sein, dass vorzugsweise nach einem Beschichtungsvorgang der Vorgang des Granulierens nach einer der oben genannten Methoden wiederholt wird.

In einer Ausführungsform der Erfindung kann es weiters vorgesehen sein, vor dem eigentlichen Pressvorgang des Keramikrohstoffgranulats Teile des Keramikrohstoffgranulats in Sonderformen zu verpressen und vorzusintem, damit diese Formen während des eigentlichen Pressvorgangs im Wesentlichen erhalten bleiben. Diese Sonderformen können Kugeln oder Quader, aber auch Spezialmotive wie Herzen oder dgl. umfassen. Dieser Sintervorgang kann beispielsweise bei einer Temperatur von weniger als 1000°C ablaufen.

Nachdem der Keramikrohstoff granuliert und zumindest teilweise beschichtet wurde, wird der Keramikrohstoff verpresst, wodurch ein relativ poröser Körper entsteht. Während dieses Pressvorgangs ist der granulierte und zumindest teilweise beschichtete Keramikrohstoff Drücken, vorzugsweise zwischen 100 und 500 bar, ausgesetzt. Es kann auch vorgesehen sein, mit Drücken von mehreren Tausend bar zu arbeiten. In einer Ausführungsform entstehen durch diesen Pressvorgang Körper mit Abmessungen vorzugsweise zwischen 3 mm und 100 mm.

In einer weiteren Ausführungsform der Erfindung ist vorgesehen, dass vor dem Pressvorgang dem zumindest teilweise beschichteten erfindungsgemäßen Keramikrohstoffgranulat noch ein weiteres Keramikrohstoffgranulat beigegeben wird. Dieses weitere Keramikrohstoffgranulat kann dabei ebenfalls zumindest teilweise beschichtet sein, wobei diese Beschichtung mit einem Verfahren wie oben beschrieben durchgeführt worden sein kann. Dabei kann es vorteilhaft sein, dass dieses weitere Keramikrohstoffgranulat selbst und zusätzlich oder alternativ dessen Beschichtung eine andere Farbe als das Keramikrohstoffgranulat und/oder dessen Beschichtung aufweist. Durch eine derartige Beigabe wird es ermöglicht einen Keramikformteil mit mehr als zwei Farben und zusätzlich oder alternativ zwei verschiedenfarbigen bänderartigen Strukturen zu erzeugen.

In einer Ausführungsform der Erfindung ist vorgesehen, dass an dem verpressten Koramikformteil eine Vorrichtung zur Befestigung an einem Träger angeordnet wird. Dabei kann es sich um ein Loch handeln, welches im Keramikformteil angeordnet wird, damit dieser beispielsweise als Schmuckstein auf eine Kette aufgefädelt werden kann.

In einer bevorzugten Ausführungsform der Erfindung wird das verpresste Keramikrohstoffgranulat, vorzugsweise nachdem es zumindest teilweise beschichtet wurde, gesintert, wodurch große Teile der eingeschlossenen Luft verschwinden und die Porosität deutlich reduziert wird. Es kann dabei vorgesehen sein, dass der verpresste Keramikrohstoff bei einer Temperatur zwischen 500° C und 1300° C, vorzugsweise bei ca. 1,200° C für ca. 30 Minuten gesintert wird.

Durch den Pressvorgang kann es vorkommen, dass sich das Farbpigment oder die Farbpigmentmasse am Rand des Keramikformteils ansammelt und dieser abschnittsweise unerwünscht einfärbig ist. In einer besonders bevorzugten Ausführungsform der Erfindung ist daher vorgesehen, den erfindungsgemäßen Keramikformteil zu scheuem, beispielsweise indem ein oder mehrere Keramikformteile in einer Trommel bewegt werden. Dadurch wird die Oberfläche abrasiv behandelt und zumindest Teile der Farbe an der Oberfläche abgescheuert, wodurch die Farbbereiche der einzelnen Granalien an der Oberfläche sichtbar werden. Dabei kann dieser Scheuerprozess vor oder nach einem gegebenenfalls erfolgendem Sintern des erfindungsgemäßen Keramikformteils erfolgen.

In einer bevorzugten Ausführungsform der Erfindung wird das verpresste Keramikrohstoffgranulat, vorzugsweise nachdem dieses gesintert wurde, einer weiteren mechanischen Bearbeitung zugeführt, um weitere gewünschte dekorative Effekte zu erzielen. Dabei kann vorgesehen sein, dass zumindest Teilbereiche der Oberfläche geschliffen und zusätzlich oder alternativ poliert werden, beispielsweise um eine facettierte Oberfläche zu erhalten. Weiters kann vorgesehen sein, dass das verpresste Keramikrohstoffgranulat geschnitten und/oder gespalten wird sowie zusätzlich oder alternativ geschliffen und/oder poliert wird. Aufgrund der mechanischen Bearbeitung des verpressten Keramikrohstoffgranulats sowie der zumindest teilweisen Beschichtung ergeben sich hier vielfältige und vorzugsweise unregelmäßige Farbeffekte mit wenigstens zwei Farben, wobei die zweite der wenigstens zwei Farben in einer bänderartigen Struktur am Keramikformteil auftritt. Insbesondere kann der so gewonnene Keramikformteil ein dekorativer Schmuckstein sein, der je nach mechanischer Bearbeitung beispielsweise rund oder teilweise mit Facetten versehen sein kann, oder zumindest abschnittsweise eine Oberfläche mit der Form eines regelmäßigen bzw. unregelmäßigen Polyeders haben kann. Es kann in einer weiteren Ausführungsform der Erfindung auch vorgesehen sein, dass nachdem der verpresste Keramikformteil gescheuert und gesintert wurde, nur Teile der Oberfläche des Keramikformteils einer weiteren mechanischen Behandlung, beispielsweise Schleifen und/oder polieren, zugeführt werden. Dadurch können sich vielfältige Kombinationen aus geschliffenen und/oder polierten Flächen mit natürlich belassenen Oberflächen ergeben, wobei die natürlich belassenen Oberflächen aufgrund des unregelmäßigen Scheuerprozesses eine gewisse Rauheit aufweisen, während die geschliffenen und/oder polierten Flächen glatt sind.

Weitere Einzelheiten und Vorteile der vorliegenden Erfindung werden anhand der Figurenbeschreibung unter Bezugnahme auf die Zeichnungen im Folgenden näher erläutert Darin zeigt:
- Fig. 1: eine schematische Darstellung der Ausgangsmaterialien des erfindungsgemäßen Verfahrens,
- Fig. 2: eine schematische Darstellung eines Mischvorgangs des Keramikrohstoffs,
- Fig. 3: eine schematische Darstellung einer Herstellung von Keramikrohstoffgranulat aus Keramikrohstoff,
- Fig. 4: eine schematische Darstellung der Beigabe von Farbpigmentmasse zum Keramikrohstoffgranulat,
- Fig. 5: eine schematische Darstellung eines Verpressungsvorganges von zumindest teilweise beschichtetem Keramikrohstoffgranulat,
- Fig. 6: eine schematische Darstellung eines Sinterprozesses von zumindest teilweise beschichtetem und verpresstem Keramikrohstoffgranulat,
- Fig.7: eine schematische Darstellung eines Scheuerprozesses von zumindest teilweise beschichtetem und verpresstem sowie gesintertem Keramikrohstoffgranulat,
- Fig. 8: eine schematische Darstellung eines Schleifprozesses eines zumindest teilweise beschichteten, verpressten, gesinterten und gescheuerten Keramikrohstoffgranulat,
- Fig. 9: eine schematische Darstellung eines Keramikrohstoffgranulats,
- Fig. 10: eine schematische Darstellung von zumindest teilweise beschichtetem Keramikrohstoffgranulat,
- Fig.11: eine schematische Darstellung von zumindest teilweise beschichtetem und verpresstem Keramikrohstoffgranulat,
- Fig. 12: eine schematische Darstellung von zumindest teilweise beschichtetem, verpresstem und gescheuertem Keramikrohstoffgranulat,
- Fig. 13: eine Darstellung eines erfindungsgemäßen zweifärbigen Keramikformteiles,
- Fig. 14a und 14b: eine Seiten- bzw. Draufsicht einer Ausführungsform eines erfindungsgemäßen Keramikformteils.
- Fig. 15a und 15b: eine Seiten- bzw. Draufsicht einer weiteren Ausführungsform eines erfindungsgemäßen Keramikfomiteils,
- Fig. 16a und 16b: eine Seiten- bzw. Draufsicht einer weiteren Ausführungsform eines erfindungsgemäßen Keramikformteils,
- Fig. 17a und 17b: eine Seiten- bzw. Draufsicht einer weiteren Ausführungsform eines erfindungsgemäßen Keramikformteils,
- Fig. 18a und 18b: eine Seiten- bzw. Draufsicht einer weiteren Ausführungsform eines erfindungsgemäßen Keramikformteils,
- Fig. 19a und 19b: eine Seiten- bzw. Draufsicht einer weiteren Ausführungsform eines erfindungsgemäßen Keramikformteils und
- Fig. 20a bis 20h: eine schematische Darstellung eines Prozessablaufs des erfindungsgemäßen Verfahrens.

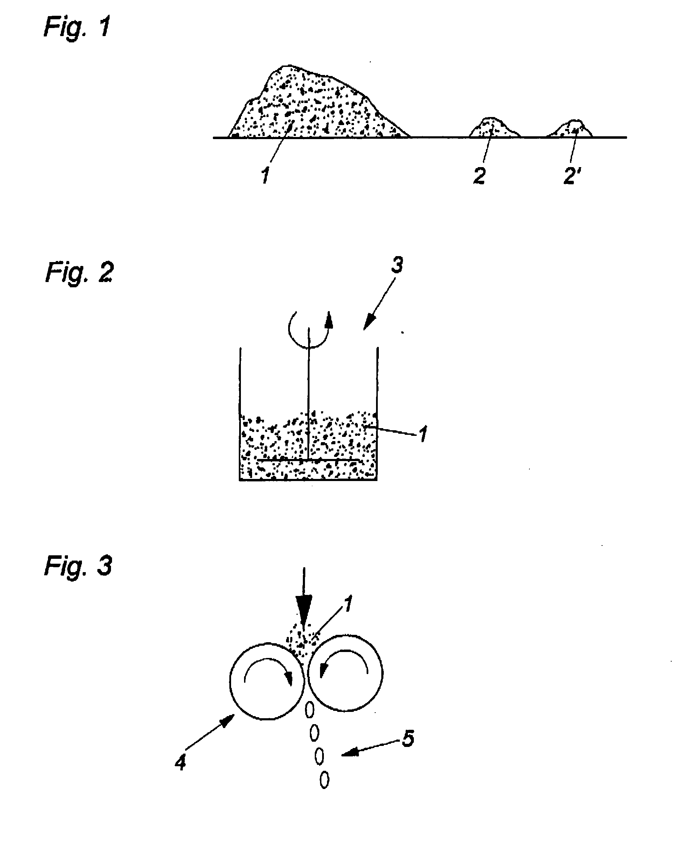

In Fig. 1 sind schematisch die Ausgangsmaterialien für das erfindungsgemäße Verfahren dargestellt. Neben dem Keramikrohstoff 1, der dabei aus einer Mischung von Quarz, Feldspat sowie Schichtsilikaten bestehen kann, ist eine Farbpigmentmasse 2 nötig, mit der die Oberfläche des granulierten Keramikrohstoffs zumindest teilweise beschichtet wird. Es kann auch vorgesehen sein, mit einem Farbpigment 2' den Keramikrohstoff 1 einzufärben oder den granulierten Keramikrohstoff 5 mit einer weiteren Farbe zumindest teilweise zu beschichten.

In Fig. 2 ist schematisch dargestellt, wie der Keramikrohstoff 1 in einer Mischvorrichtung 3 durchgemischt wird. Dabei kann es vorgesehen sein, den Keramikrohstoff 1 mit einem eine erste Farbe aufweisenden Farbpigment 2' einzufärben.

Fig. 3 zeigt eine schematische Darstellung eines Granulationsprozesses, wobei der Keramikrohstoff 1 in einer Rollenpresse 4, bestehend aus zwei sich gegenläufig drehenden Rollen, die in einem geringen Abstand zueinander angeordnet sind, zu einem Keramikrohstoffgranulat 5 verpresst wird. Derartige Granulationsprozesse sind an und für sich im Stand der Technik bekannt und neben diesem Pressvorgang, der eher runde Granulate erzeugt, können verschiedene andere Granulationsprozesse verwendet werden, um ein Keramikrohstoffgranulat 5 zu erzeugen, wie es im erfindungsgemäßen Verfahren verwendet wird.

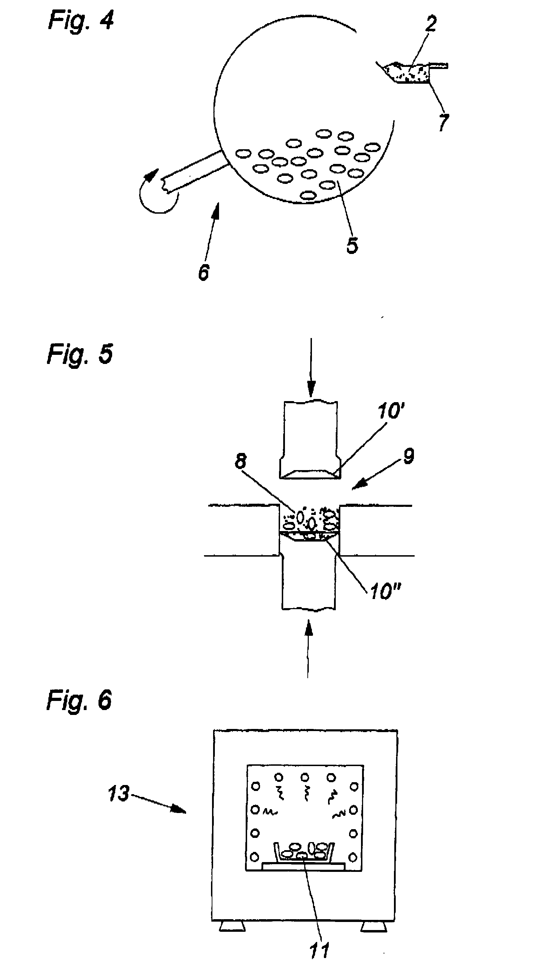

Fig. 4 zeigt eine schematische Darstellung, wo die Farbpigmentmasse 2 mit einer Vorrichtung 7 zum Keramikrohstoffgranulat 5, welches sich in einem rotierenden Mischwerk 6 befindet, beigegeben wird. Dabei kann das Keramikrohstoffgranulat 5 vorher mit Wasser besprüht worden sein oder aber auch die Farbpigmentmasse 2 eine flüssige Farbpigment-Wasser-Susperision darstellen und die Vorrichtung 7 als Sprühvorrichtung ausgebildet sein.

In Fig. 5 ist schematisch ein Pressvorgang gezeigt, wobei das - wie in Fig. 4 gezeigt - zumindest teilweise beschichtete Keramikrohstoffgranulat 8 in einer Pressvorrichtung 9 in eine bestimmte Form verpresst werden, wobei die Form in diesem Ausführungsbeispiel durch die zwei Hälften 10', 10" eines Werkzeugs dargestellt sind.

In Fig. 6 ist schematisch dargestellt, wie das zumindest teilweise beschichtete und verpresste Keramikrohstoffgranulat 11 in einem Sinterofen 13 gesintert wird. Dieser Sinterprozess kann dabei beispielsweise 30 Minuten bei ca. 1,200 °C ablaufen. Durch den Sinterprozess wird die Porosität des zumindest teilweise beschichteten und verpressten Keramikrohstoffgranulats 11 reduziert, was auch mit einem gewissen Schrumpfprozess einhergeht.

Durch den Pressvorgang kann es vorkommen, dass Abschnitte der Oberfläche des zumindest teilweise beschichteten und verpressten Keramikrohstoffgranulats einfärbig sind, was einen unerwünschten dekorativen Effekt mit sich bringt. Um Teile dieser Farbe, die aus der Beschichtung mit der Farbpigmentmasse 2 besteht, von der Oberfläche zu entfernen, ist in einer Ausführungsform der Erfindung vorgesehen, dass eine Mehrzahl von zumindest teilweise beschichtetem, verpresstem und gesintertem Keramikrohstoffgranulat 19 in einer rotierenden Mischtrommel 12 bewegt wird. Dadurch wir die Oberfläche des zumindest teilweise beschichteten, verpressten und gesinterten Keramikrohstoffgranulats 19 abgescheuert, wobei diese Oberfläche nach diesem unregelmäßigen Scheuerprozess über eine gewisse Rauheit verfügt. Ein derartiger Scheuerprozess kann statt nach dem Sinterprozess auch vor dem Sinterprozess durchgeführt werden.

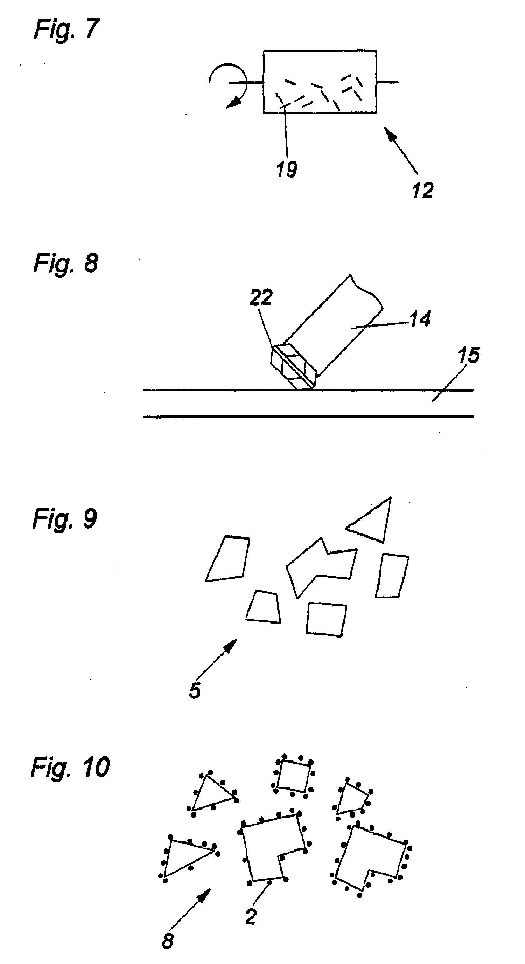

In Fig. 8 ist schematisch eine weitere Ausführungsform der Erfindung dargestellt. Hier wird ein zumindest teilweise beschichtetes, verpresstes, gesintertes und gescheuertes Keramikrohstoffgranulat 22 mit einer Halterung 14 an ein Schleifmittel 15 geführt, wodurch zumindest Teile der Oberfläche facettiert geschliffen werden, um einen erfindungsgemäßen Keramikformteil 16 zu erhalten.

Die Fig. 9 bis 13 zeigen die Produkte, die zu manchen Stadien des oben dargestellten Prozesses gehören. In Fig. 9 ist schematisch das Keramikrohstoffgranulat 5 dargestellt, wie es nach einem Granulationsprozess, wie in Fig. 3 dargestellt, hergestellt wird. In diesem Fall ist das Keramikrohstoffgranulat im Wesentlichen eckig. In Fig. 10 sieht man, wie am Keramikrohstoffgranulat 5 die Farbpigmentmasse 2 anlagert und so ein zumindest teilweise beschichtetes Keramikrohstoffgranulat 8, wie in Fig. 4 dargestellt, hergestellt wird. Dabei kann diese Beschichtung regelmäßig oder unregelmäßig sein, indem die Oberfläche der einzelnen Granalien des Keramikrohstoffgranulats 5 nur teilweise beschichtet wird und zusätzlich oder alternativ einzelne Granalien des Keramikrohstoffgranulats 5 gar nicht beschichtet werden.

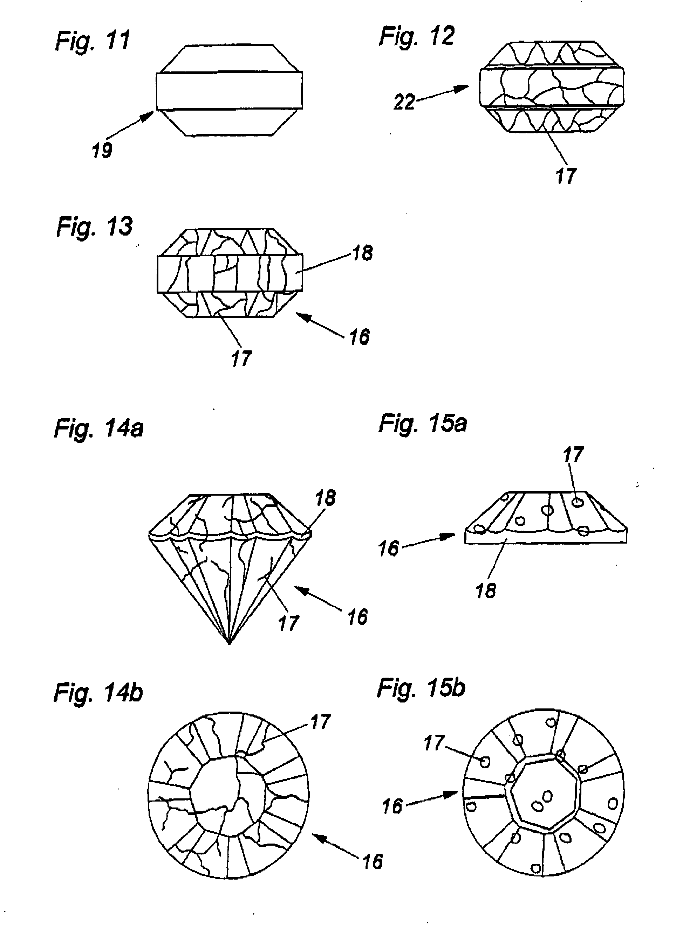

In Fig. 11 ist ein zumindest teilweise beschichtetes, verpresstes und gesintertes Keramikrohstoffgranulat 19 dargestellt. Durch den Pressvorgang ist hierbei zumindest teilweise die Oberfläche einfärbig, da das beschichtete Keramikrohstoffgranulat 5 sich so angeordnet hat, dass die Beschichtung mit Farbpigmentmasse 2 großflächig an der Außenseite des verpressten und gesinterten Keramikrohstoffgranulats 19 anzufinden ist.

In Fig. 12 ist ein Keramikformteil 22 dargestellt, wie er durch einen Scheuerprozess aus Fig. 7 vom Keramikformteil 19 hervorgeht. Deutlich zu erkennen ist die bänderartige Struktur 17, welche die zweite der wenigstens zwei Farben des erfindungsgemäßen Keramikformteils darstellt. Dabei werden diese einzelnen Bänder der bänderartigen Struktur 17 durch die Beschichtung gebildet und durch die Grenzfläche mehrerer aufeinandergepressten Granalien des Keramikrohstoffgranulat 5 geformt. Die Bereiche zwischen den Bändern weisen dabei die Farbe des Keramikrohstoffgranulats 5 auf.

In Fig. 13 ist ein Keramikformteil 16 zu sehen, wie er sich aus einem Schleifprozess, wie in Fig. 8 dargestellt, ergibt. Dabei ist die Ober- und Unterseite des Keramikformteils 16 facettiert geschliffen, während ein Mittelteil als natürlich belassener Rand 18, wie er aus dem Scheuerprozess hervorgeht, belassen wird. Wiederum ist deutlich die bänderartige Struktur 17 mit der zweiten der wenigstens zwei Farben des erfindungsgemäßen Keramikformteils 16 zu erkennen.

In Fig. 14a ist in einer Seitenansicht eine weitere Ausführungsform eines erfindungsgemäßen Keramikformteils 16 mit bänderartiger Struktur 17 und schmalem, natürlich belassenen Rand 18 zu sehen. Die entsprechende Draufsicht ist in Fig. 14b gezeigt. Je nach Schleifprozess sind beliebige Formen des erfindungsgemäßen Keramikformteils 16 möglich.

In Fig. 15a ist die Seitenansicht einer weiteren Ausführungsform eines Keramikformteils 16 dargestellt. Hierbei ist die Unterseite und die Oberseite planar geschliffen mit Facetten und natürlich belassenem Rand 18 dazwischen liegend. In diesem Ausführungsbeispiel wurde ein rundes Keramikrohstoffgranulat 5 verwendet, wodurch die bänderartige Struktur 17 im Wesentlichen kreisförmig ist. Die entsprechende Draufsicht ist in Fig. 15b gezeigt. Da die Größe des Keramikrohstoffgrariulats 5 in dieser Ausführungsform unregelmäßig ist, sind auch die Größen der kreisförmigen bänderartigen Struktur 17 unregelmäßig.

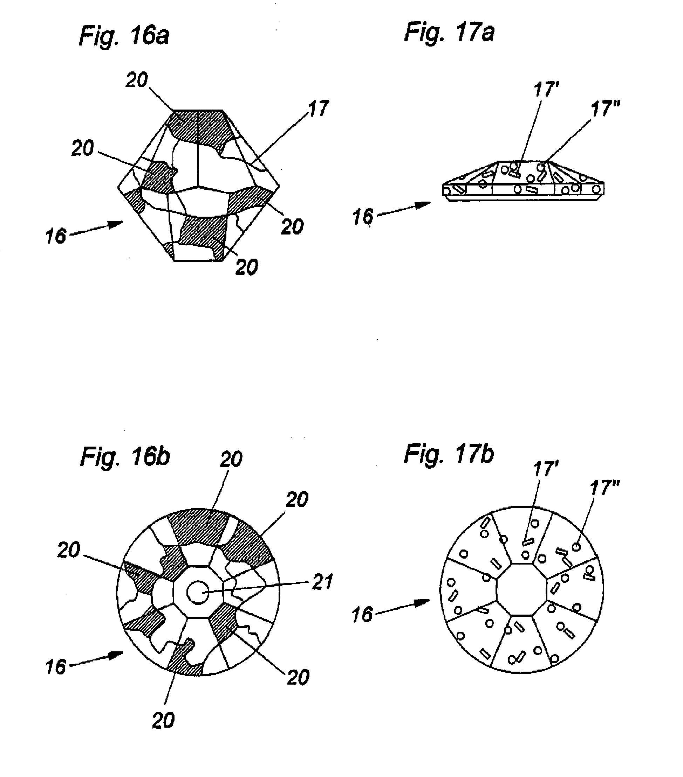

Eine weitere Ausführungsform eines Keramikformteils 16 ist in Fig. 16a in einer Seitenansicht zu sehen. Zu dem beschichteten Keramikrohstoffgranulat 8, welches die bänderartige Struktur 17 bedingt, wurde vor dem Pressvorgang ein weiteres, eine andere Farbe aufweisendes Keramikrohstoffgranulat beigegeben. Nach dem Schleifprozess, welcher die facettierte Oberfläche des Keramikformteils 16 erzeugt, weisen dann Teile der Oberfläche, die dem weiteren beigegebenen Keramikrohstoffgranulat entsprechen, eine weitere Farbe auf. Diese Bereiche sind in diesem Fall durch die schraffierten Flächen 20 dargestellt. Somit können Keramikformteile 16 mit mehr als zwei Farben hergestellt werden. In der Draufsicht in Fig. 16b ist ein Loch 21 dargestellt, welches als Vorrichtung zur Befestigung an einer Kette oder einem Faden dient. Wie die unregelmäßige bänderartige Struktur 17 zeigt, weist das in dieser Ausführungsform verwendete Keramikrohstoffgranulat 5 unregelmäßige Form und Größe auf.

In der Ausführungsform des Keramikformteils 16, das in Fig. 17a in einer Seitenansicht dargestellt ist, besteht die bänderartige Struktur 17 aus regelmäßigen Rechtecken 17' und Kreisen 17". Diese entstehen, indem das verwendete Keramikrohstoffgranulat 5, bestehend aus regelmäßigen Zylindern und regelmäßigen Kugeln gleicher Größe, beschichtet wird und dann nach Verpressen und Sintern geschliffen wird. Die Beschichtung des zylinderförmigen Keramikrohstoffgranulats 5 ist dann als rechteckiges Band 17' und die Beschichtung des kugelförmigen Keramikrohstoffgrariulats 5 als kreisförmiges Band 17" zu sehen.

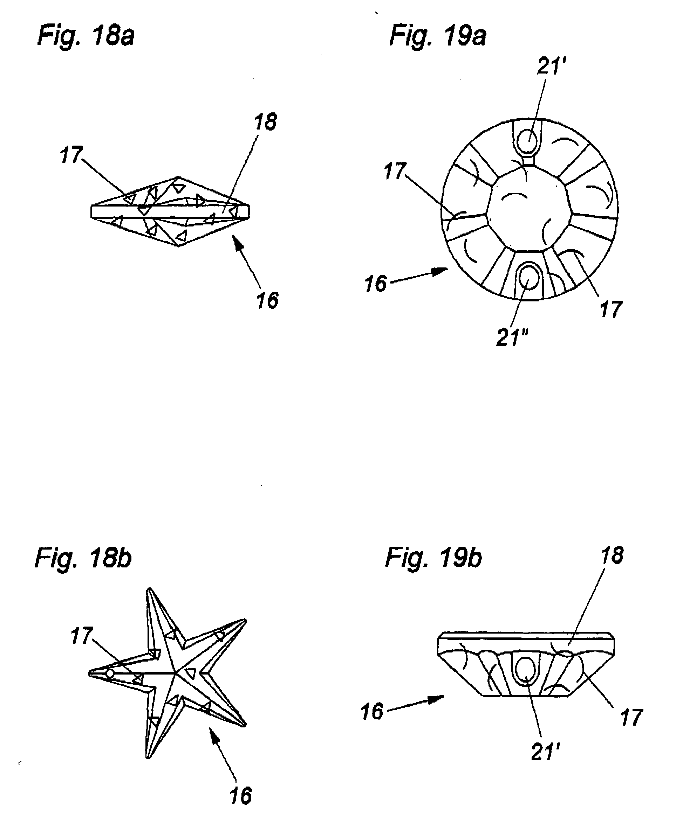

Eine weitere Ausführungsform eines erfindungsgemäßen Keramikformteils 16 ist in Fig. 18a und 18b dargestellt. Hier wurde im Schleifprozess ein sternförmiger Keramikformteil 16 hergestellt. Aufgrund der verwendeten prismenförmigen Granalien des Keramikrohstoffgranulats 5 besteht die bänderartige Struktur 17 in diesem Ausführungsbeispiel aus Dreiecken. Die einzelnen beschichteten Granalien des Keramikrohstoffgranulats 5 wurden dabei vollständig mit Farbpigmentmasse 2 ummantelt, was an den durchgehenden Dreiecken der bänderartigen Struktur 17 zu erkennen ist.

In Fig. 19a ist in einer Draufsicht eine weitere Ausführungsform eines Keramikformteils 16 dargestellt. Die hier verwendeten Granalien des Keramikrohstoffgranulats 5 wurden nur teilweise beschichtet, wie an der aus kürzeren Linien bestehenden bänderartigen Struktur 17 zu sehen ist. Im Keramikformteil 16 ist zudem ein Loch 21 angeordnet, welches als Vorrichtung zur Befestigung beispielsweise an einer Kette dient. Es kann aber auch vorgesehen sein, in den zwei Öffnungen 21' und 21" zwei Klammern anzubringen.

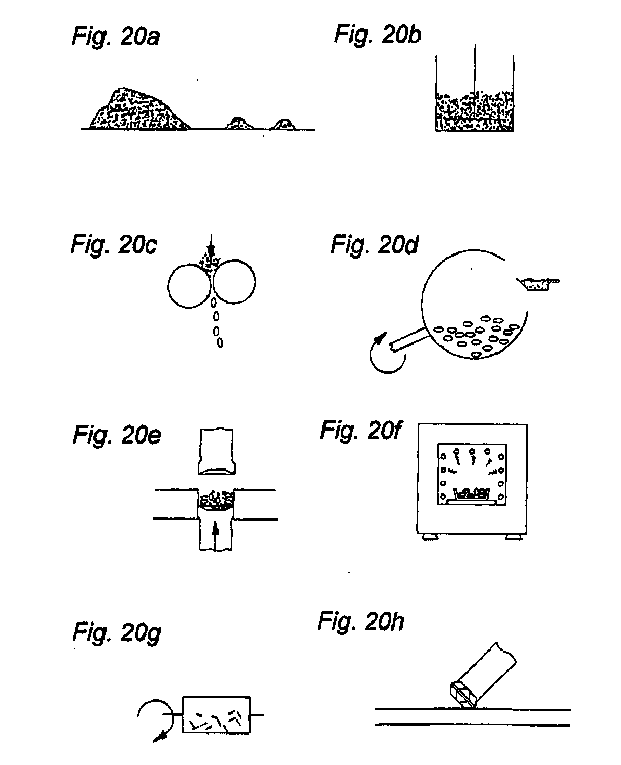

In der schematischen Darstellung von Fig. 20a bis 20h sind die einzelnen Produktionsschritte, um einen Keramikformteil 16 herzustellen, nochmals zusammengefasst. Aufgrund der kompakten Darstellung der einzelnen Prozessschritte wurde dabei auf Bezugszeichen verzichtet. Die einzelnen Bilder entsprechen allerdings den Fig. 1 bis 8 und sind dort in einer Vergrößerung mit Bezugszeichen dargestellt.

Es versteht sich von selbst, dass das erfindungsgemäße Verfahren nicht auf die Ausführungsbeispiele beschränkt ist noch durch diese eingeschränkt werden soll.

## Patentansprüche

1. Verfahren zur Herstellung von wenigstens zweifärbigen Keramikformteilen aus einem eine erste der wenigstens zwei Farben aufweisenden Keramikrohstoffgranulat, **dadurch gekennzeichnet, dass** die zweite der wenigstens zwei Farben als Farbpigment (2') oder Farbpigmentmasse (2) beigegeben wird und die Oberfläche des Keramikrohstoffgranulats (5) zumindest teilweise beschichtet wird, wobei das beschichtete Keramikrohstoffgranulat (8) anschließend in eine feste Form verpresst wird.

2. Verfahren nach Anspruch 1, **dadurch gekennzeichnet, dass** die Farbpigmentmasse (2) flüssig oder breiig ist, wobei das Keramikrohstoffgranulat (5) mit der Farbpigmentmasse (2) beschichtet wird.

3. Verfahren nach Anspruch 1 oder 2, **dadurch gekennzeichnet, dass** die Farbpigmentmasse (2) pulverförmig ist und, vorzugsweise weniger als 65%, Keramikrohstoffanteil aufweist.

4. Verfahren nach einem der Ansprüche 1 bis 3, **dadurch gekennzeichnet, dass** das die Oberfläche des Keramikrohstoffgranulats (5) durch Vermischen des Keramikrohstoffgranulats (5) mit dem Farbpigment (2') oder der Farbpigmentmasse (2) zumindest teilweise beschichtet wird.

5. Verfahren nach einem der Ansprüche 1 bis 4, **dadurch gekennzeichnet, dass** das Keramikrohstoffgranulat (5) durch Verpressen von Keramikrohstoff (1) in bestimmte, vorzugsweise kugelförmige und/oder quaderförmige, Formen oder durch Verpressen von Keramikrohstoff (1) zu Schülpen und anschließendem Brechen der gepressten Schülpen und/oder Aussieben hergestellt wird.

6. Verfahren nach einem der Ansprüche 1 bis 5, **dadurch gekennzeichnet, dass** das Keramikrohstoffgranulat (5) durch Vermengung von Keramikrohstoff (1) und Bindemittel, vorzugsweise Wasser, im Ausmaß von 5% bis 25%, vorzugsweise von 10% bis 20%, und anschließender Zerteilung mit Mischwerkzeugen und/oder Messern und Trocknung hergestellt wird.

7. Verfahren nach einem der Ansprüche 1 bis 5, **dadurch gekennzeichnet, dass** das Keramikrohstoffgranulat (5) durch mechanische Bewegung des als trockenes Pulver vorliegenden Keramikrohstoffs (1) und gleichzeitigem Besprühen mit Flüssigkeit und anschließendem Trocknen hergestellt wird.

8. Verfahren nach einem der Ansprüche 1 bis 5, **dadurch gekennzeichnet, dass** das Keramikrohstoffgranulat (5) durch Vermengung von Keramikrohstoff (1) und Bindemittel, vorzugsweise Wasser, im Ausmaß von 5% bis 25%, vorzugsweise von 15% bis 20%, und anschließender Extrusion durch ein Sieb und Rücktrocknung und/oder Rundierung der Bruchstücke hergestellt wird.

9. Verfahren nach einem der Ansprüche 1 bis 8, **dadurch gekennzeichnet, dass** die erste der wenigstens zwei Farben des Keramikformteils (16) als natürliches und/oder synthetisches Farbpigment (2') bzw. als Farbpigmentmasse (2) dem Keramikrohstoff (1) beigemengt wird, vorzugsweise bevor dieser granuliert wird, und/oder die zweite der wenigstens zwei Farben durch Besprühen des Keramikrohstoffgranulats (5) mit einer flüssigen Farbpigmentmasse (2) beigegeben wird.

10. Verfahren nach einem Ansprüche 1 bis 9, **dadurch gekennzeichnet, dass** das zumindest teilweise Beschichten der Oberfläche des Keramikrohstoffgranulats (5) wenigstens zweifach, mit andersfarbigen Farbpigmenten (2') bzw. Farbpigmentmassen (2) oder gleichfarbigen, vorzugsweise in unterschiedlicher Konzentration vorliegenden, Farbpigmenten (2') bzw. Farbpigmentmassen (2), durchgeführt wird.

11. Verfahren nach einem Ansprüche 1 bis 10, **dadurch gekennzeichnet, dass** vor dem eigentlichen Pressvorgang ein Teil des Keramikrohstoffgranulats (5) in bestimmte Formen verpresst und gesintert wird.

12. Verfahren nach einem der Ansprüche 1 bis 11, **dadurch gekennzeichnet, dass** vor dem Verpressen des Keramikrohstoffgranulats (5) ein weiteres Keramikrohstoffgranulat, vorzugsweise mit einem weiteren andersfarbigen Farbpigment oder einer weiteren andersfarbigen Farbpigmentmasse mit einem Verfahren, vorzugsweise nach einem der Ansprüche 1 bis 11, zumindest teilweise beschichtet, beigegeben wird.

13. Verfahren nach einem der Ansprüche 1 bis 12, **dadurch gekennzeichnet, dass** das verpresste Keramikrohstoffgranulat (11) gesintert und/oder gescheuert und/oder mit einer Vorrichtung (21) zur Befestigung an einem Träger versehen wird.

14. Verfahren nach einem der Ansprüche 1 bis 13, **dadurch gekennzeichnet, dass** das verpresste und gesinterte Keramikrohstoffgranulat (11) zumindest abschnittsweise durch zumindest einen der Vorgänge Schneiden, Schleifen, Spalten und Polieren bearbeitet wird.

15. Wenigstens zweifärbiger Keramikformteil (16), hergestellt nach einem Verfahren nach einem der Ansprüche 1 bis 14.

16. Schmuckstück, hergestellt aus einem wenigstens zweifärbigem Keramikformteil (16), hergestellt nach einem Verfahren nach einem der Ansprüche 1 bis 15
